# EUROPÄISCHE PATENTANMELDUNG

(11) **EP 3 424 614 A1**
(43) Veröffentlichungstag der Anmeldung: **09.01.2019**
(21) Anmeldenummer: 17179334.2
(22) Anmeldetag: 03.07.2017
(51) Int. Cl.: B22D 2/00, B22D 11/057, B22D 11/18, G01K 11/32

(54) **EINBAU EINES FASEROPTISCHEN TEMPERATURSENSORS IN EINE KOKILLE UND KOKILLE MIT MEHREREN FASEROPTISCHEN TEMPERATURSENSOREN**

(71) Anmelder: Primetals Technologies Austria GmbH, 4031 Linz (AT)
(72) Erfinder: Blumenschein, Johann, 4421 Aschach an der Steyr (AT); Leitner, Guenter, 4240 Freistadt (AT); Schuster, Martin, 4794 Kopfing (AT)
(74) Vertreter: Metals@Linz

(57) **Zusammenfassung**

Die Erfindung betrifft den Einbau eines faseroptischen Temperatursensors (7) in eine Kokille (12) und die Kokille (12) mit mehreren faseroptischen Temperatursensoren (7). Die Aufgabe der Erfindung besteht darin, den Einbau eines faseroptischen Temperatursensors (7) in die Kupferplatte (1, 13, 14) der Kokille (12) dahingehend zu verbessern, dass die Kupferplatte (1, 13, 14) durch die Löcher (6) nur wenig geschwächt wird und die Kosten für den Einbau des Temperatursensors (7) gegenüber dem Erodieren stark reduziert werden. Diese Ausgabe wird durch ein Verfahren nach Anspruch 1 gelöst.

## Beschreibung

### Gebiet der Technik

Die vorliegende Erfindung betrifft das technische Gebiet des Stranggießens. Beim Stranggießen wird eine Metallschmelze, typischerweise eine Stahlschmelze, in eine gekühlte Kokille eingefüllt. In der Kokille bildet sich aus der Metallschmelze ein teilerstarrter Strang aus, der aus der Kokille kontinuierlich ausgezogen und in der nachfolgenden Strangführung geführt, gestützt und weiter abgekühlt wird.

Da sich in der Kokille im Bereich des sog. Meniskus eine sehr dünne Strangschale ausbildet, deren Dicke in Auszugsrichtung durch weitere Abkühlung zunimmt, kommt der Temperaturführung in der Kokille besondere Bedeutung zu.

### Stand der Technik

Aus dem Stand der Technik sind Kokillen mit faseroptischen Temperatursensoren bekannt. Ein faseroptischer Temperatursensor weist mehrere Messstellen auf, deren Temperatur zum Beispiel nach dem Faser-Bragg Prinzip ausgewertet werden kann. Die Temperatursensoren sind oftmals innerhalb einer Kanüle angeordnet, wobei die Kanüle mit dem faseroptischen Temperatursensor in eine Nut, eine Ausnehmung oder eine Bohrung in der Kupferplatte der Kokille eingebaut wird. Eine Auswerteeinheit (auch Interrogator genannt) wertet die Signale von einem oder mehrerer Temperatursensoren aus und ermittelt die Temperaturen an den Messstellen des faseroptischen Temperatursensors. Da jeder Temperatursensor mehrere Temperaturen ermitteln kann, ist es wichtig, dass ein zuverlässiger und gleichmäßig starker Kontakt zwischen dem Temperatursensor und der Kupferplatte gegeben ist. Beim Erodieren von Löchern in eine Kupferplatte hat sich herausgestellt, dass die Löcher aufgrund des Erodierens nicht gleichmäßig rund sind bzw. die Löcher in Tiefenrichtung nicht exakt zylindrisch, sondern leicht kegelig, sind. Dadurch sinkt die Ansprechzeit des Temperatursensors ab, sodass dynamische Phänomene in der Kokille, wie schnelle Änderungen des Gießspiegels, oder sog. Schalenhänger, Längs- oder Querrisse im Strang, nicht oder nur verspätet erkannt werden können. Außerdem ist das Erodieren zeitaufwendig und teuer.

Da die Kupferplatten einer Kokille während des Stranggießens verschleißen, müssen die Kokille, die Kupferplatten und die Temperatursensoren regelmäßig ausgetauscht werden. Die Löcher, Nuten oder Ausnehmungen in der Kupferplatte zur Aufnahme der Temperatursensoren dürfen die Kupferplatte nicht zu sehr schwächen, da sich dies negativ auf die Standzeit der Kokille auswirkt. Außerdem verändern relativ dicke Löcher, Nuten oder Ausnehmungen den Wärmestrom durch die Kupferplatte, was ebenfalls nicht gewollt ist. Aus diesem Grund werden relativ dünne Löcher bevorzugt. Da der Gießspiegel in der Kokille insbesondere beim Angießen oder kurz vor Gießende einen weiten Bereich einnehmen kann, sollten die Löcher in der Kupferplatte in Gießrichtung betrachtet relativ tief sein. Mit den Technologien nach dem Stand der Technik stößt man heutzutage an Grenzen bzgl. der Tiefe und den Durchmesser der Löcher, der Formhaltigkeit der Löcher und den Fertigungskosten bzw. der Fertigungszeit für die Löcher.

Aus der WO 2010/003695 und der US 6419005 B1 sind Kokillen mit mehreren Bohrungen zur Aufnahme eines Kühlmediums bekannt, wobei die Bohrungen durch Tieflochbohren hergestellt werden.

Somit besteht ein Bedarf nach einem neuen Verfahren zum Einbau eines faseroptischen Temperatursensors in eine Kokille und nach Kokillen mit mehreren faseroptischen Temperatursensoren, die nach dem neuen Verfahren eingebaut wurden.

### Zusammenfassung der Erfindung

Die Aufgabe der Erfindung besteht darin, die Verfahren zum Einbau eines faseroptischen Temperatursensors in eine Kupferplatte einer Kokille zu verbessern, sodass die Kupferplatte durch die Löcher nur wenig geschwächt wird, der Wärmestrom aufgrund der Löcher nur unwesentlich verändert wird, die Kanülen der faseroptischen Temperatursensoren dennoch gleichmäßig stark an den Löchern anliegen, und die Kosten für den Einbau der Temperatursensoren gegenüber dem Erodieren stark reduziert werden.

Eine weitere Aufgabe der Erfindung besteht darin, Kokillen mit mehreren faseroptischen Temperatursensoren anzugeben, sodass die Temperatursensoren in der Kokille rasch auf Änderungen der Füllhöhe reagieren bzw. durch die Auswertung der Temperatursensoren zuverlässig auf einen Längsriss im Strang oder einen Schalenhänger geschlossen werden kann. Außerdem soll die räumliche Auflösung der Temperaturmessung in der Kokille erhöht werden.

Der verfahrensmäßige Aspekt dieser Aufgabe wird durch das Verfahren nach Anspruch 1 gelöst. Vorteilhafte Ausführungsformen sind Gegenstand der abhängigen Ansprüche.

Konkret wird die Aufgabe durch ein Verfahren zum Einbau eines faseroptischen Temperatursensors in eine Kokille gelöst, das folgende Schritte umfasst:
- Bohren eines zylindrischen Lochs in eine Kupferplatte der Kokille, wobei das Loch auf einer Tieflochbohrmaschine durch einen Einlippenbohrer gebohrt wird und während des Bohrens ein Kühlmittel den Einlippenbohrer in Richtung des Bohrgrunds durchströmt, sodass das Kühlmittel den Einlippenbohrer kühlt und Bohrspäne vom Bohrgrund entfernt;
- Einführen einer zylindrischen Kanüle in das Loch, wobei der faseroptische Temperatursensor mit mehreren Messstellen zur Temperaturmessung innerhalb der Kanüle angeordnet ist;

- Fixieren der Kanüle, wobei die Kanüle in axialer Richtung des Lochs fixiert wird;
- Einbau der Kokille in eine Stranggießmaschine, wobei die Kokille mit einer Oszilliereinheit verbunden wird; und
- Verbinden des faseroptischen Temperatursensors mit einer auf dem Festland der Stranggießmaschine angeordneten Auswerteeinheit, sodass die Auswerteeinheit die Temperatur an den Messstellen des Temperatursensors messen kann.

Im ersten Schritt wird zumindest ein zylindrisches Loch - meist jedoch mehr als fünf Löcher pro Kupferplatte - in eine Kupferplatte der Kokille gebohrt. Das Bohren selbst wird auf einer Tieflochbohrmaschine durchgeführt; hierbei bohrt ein Einlippenbohrer ein tiefes Loch in die Kupferplatte, wobei während des Bohrens ein Kühlmittel den Einlippenbohrer axial in Richtung des Bohrgrunds durchströmt, sodass das Kühlmittel den Einlippenbohrer kühlt und Bohrspäne vom Bohrgrund entfernt. Unter dem Begriff Tieflochbohrmaschine soll eine zum Tieflochbohren geeigneten Maschine verstanden werden. Die Schneidkanten des Einlippenbohrers können bspw. aus Hartmetall oder einer harten Keramik bestehen. Nach dem Reinigen des Lochs, z.B. durch das Einbringen eines Reinigungsfluids in das Loch unter Überdruck, wird eine Kanüle in das Loch eingeführt, wobei der faseroptische Temperatursensor mit mehreren Messstellen im Inneren der Kanüle angeordnet ist. Die Kanüle wird anschießend an der Kupferplatte befestigt, sodass die Kanüle in axialer Richtung des Lochs fixiert wird. Das Tieflochbohren, Einführen der Kanüle mit dem faseroptischen Temperatursensor sowie das Fixieren der Kanüle wird wiederholt, bis sämtliche Löcher mit Temperatursensoren bestückt sind. Anschließend wird die Kokille zur Stranggießmaschine transportiert und an der Oszilliereinheit befestigt. Nach dem Einbau der Kokille werden die faseroptischen Temperatursensoren mit einer Auswerteeinheit verbunden, wobei die Auswerteeinheit auf dem Festland der Stranggießmaschine angeordnet ist und die Temperatur an den Messstellen des Temperatursensors messen kann.

Es ist vorteilhaft, wenn das zylindrische Loch ein Durchgangsloch ist und ein zweites Ende des Lochs verschlossen wird. Durchgangslöcher können einfach gereinigt werden und durch Tieflochbohren schnell und genau gefertigt werden. Alternativ kann das zylindrische Loch aber auch ein Sackloch sein.

Da der Durchmesser des zylindrischen Lochs gering sein soll, ist es vorteilhaft, wenn für die Tiefe des Lochs T gilt *T* ≥ 200*D,* bevorzugt *T* ≥ 300*D*, besonders bevorzugt *T* ≥ 400*D*, wobei D der Durchmesser des zylindrischen Lochs ist. Durch das Tieflochbohren können aber noch tiefere dünne Löcher gebohrt werden, z.B. ein Loch mit einem Durchmesser von 3 mm und einer Tiefe von 2100 mm.

Es hat sich herausgestellt, dass Durchmesser D zwischen 0,8 und 4 mm bei Kokillen vorteilhaft sind.

Um einen gleichmäßigen Kontakt zwischen der Kanüle und dem Loch sicherzustellen, sollte der Durchmesser d der Kanüle *0,8.D* ≥ *d* ≥ 0,999.*D* sein, wobei D der Durchmesser des zylindrischen Lochs ist.

Im allgemeinen besteht die Kanüle aus Stahl, bevorzugt aus rostfreiem Stahl, und die Kupferplatte aus Kupfer bzw. einer Kupferlegierung. Außerdem können für die Kanüle auch Nickel- oder Kupferlegierungen verwendet werden.

Der Temperatursensor ist typischerweise ein Lichtwellenleiter mit mehreren Messstellen, wobei die Temperaturen an den Messstellen nach dem Faser-Bragg Verfahren ausgewertet werden.

Bei besonders tiefen Löchern ist es vorteilhaft, zuerst ein erstes Sackloch an einer ersten Position auf einer ersten Seite der Kupferplatte und dann ein zweites Sackloch an einer zweiten Position auf einer zweiten Seite der Kupferplatte zu bohren. Die erste Seite liegt der zweiten Seite gegenüber und die erste Position soll im eingebauten Zustand der Kupferplatte im Wesentlichen in vertikaler oder horizontaler Richtung der zweiten Position gegenüberliegen. Hierbei ist es nicht notwendig, dass die erste Position exakt der zweiten Position gegenüberliegt. Weiters ist es irrelevant, wenn die Sacklöcher nicht exakt horizontal bzw. vertikal sind, sondern aufgrund der großen Bohrtiefe etwas windschief sind. Nach dem Bohren werden Kanülen mit faseroptischen Temperatursensoren in die Sacklöcher eingeführt und die Kanülen im jeweiligen Sackloch in axialer Richtung fixiert.

Der vorrichtungsmäßige Aspekt der Aufgabe wird durch eine Kokille mit mehreren faseroptischen Temperatursensoren gelöst, wobei die Temperatursensoren vorzugsweise gemäß dem erfindungsgemäßen Verfahren in die Kokille eingebaut werden,
- wobei die Kokille mit einer Oszilliereinheit lösbar verbunden ist;
- wobei zumindest vier faseroptische Temperatursensoren in einer oder mehreren Kupferplatten in vertikaler Richtung angeordnet sind, sodass die Füllhöhe einer Stahlschmelze in der Kokille durch eine Auswerteeinheit zur Auswertung der Temperatursensoren bestimmt werden kann; und
- wobei die Auswerteeinheit auf dem Festland der Stranggießmaschine angeordnet ist, und ein Lichtwellenleiter einen faseroptischen Temperatursensor mit der Auswerteeinheit verbindet.

Zur Erfassung des Gießspiegels einer Stahlschmelze in einer Kokille sollten zumindest vier faseroptische Temperatursensoren in einer oder mehreren Kupferplatten in vertikaler Richtung angeordnet sein. Da die Auswerteeinheit nicht so robust wie ein Temperatursensor ist, ist diese auf einem Festland der Stranggießanlage (z.B. der stillstehenden Stahlkonstruktion oder auf der Gießbühne) angeordnet. Die faseroptischen Temperatursensoren in den Kupferplatten der Kokille sind über Lichtwellenleiter mit der Auswerteeinheit verbunden. Die Auswerteeinheit ist wiederum über eine Netzwerks- oder Busverbindung mit dem Steuerrechner der Stranggießanlage verbunden.

Alternativ oder in Kombination mit der Kokille mit vertikalen faseroptischen Temperatursensoren können zumindest zwei Temperatursensoren in einer oder mehreren Kupferplatten in horizontaler Richtung angeordnet sein, sodass bspw. ein Längsriss im Strang oder ein Schalenhänger des Strangs durch eine Auswerteeinheit zur Auswertung der Temperatursensoren bestimmt werden kann. Auch bei dieser Ausführungsform ist die Auswerteeinheit auf dem Festland der Stranggießanlage angeordnet.

Wenn die Kokille je zwei Breitseiten- und zwei Schmalseiten-Kupferplatten aufweist, ist es vorteilhaft, wenn der horizontale Abstand zwischen zwei, jeweils in vertikaler Richtung angeordneten, benachbarten Temperatursensoren auf einer Breitseiten-Kupferplatte zwischen 30 und 300 mm beträgt, und der horizontale Abstand zwischen zwei, jeweils in vertikaler Richtung angeordneten, benachbarten Temperatursensoren auf einer Schmalseiten-Kupferplatte zwischen 30 und 200 mm beträgt.

Wenn die Kokille eine Rohrkokille ist, ist es vorteilhaft, wenn die rohrförmige Kupferplatte zumindest 4 vertikal ausgerichtete, in Umfangsrichtung der Kupferplatte angeordnete, faseroptische Temperatursensoren aufweist. Auch hier sollte ein Abstand in tangentialer Richtung zwischen zwei benachbarten Temperatursensoren zwischen 30 und 300 mm betragen.

Ein vertikal ausgerichteter faseroptischer Temperatursensor für eine Breitseiten-Kupferplatte oder für eine rohrförmige Kupferplatte weist vorzugsweise in einem oberen ersten Bereich direkt unterhalb der Oberkante der Kupferplatte keine Messpunkte auf, in einem unterhalb des ersten Bereichs angeordneten zweiten Bereich beträgt der Abstand zwischen zwei Messpunkten von 2 bis 20 mm, und in einem unterhalb des zweiten Bereichs angeordneten dritten Bereich beträgt der Abstand zwischen zwei Messpunkten von 5 bis 100 mm.

Ein vertikal ausgerichteter faseroptischer Temperatursensor für eine Schmalseiten-Kupferplatte weist vorzugsweise in einem oberen ersten Bereich direkt unterhalb der Oberkante der Kupferplatte keine Messpunkte auf, in einem unterhalb des ersten Bereichs angeordneten zweiten Bereich beträgt der Abstand zwischen zwei Messpunkten von 2 bis 20 mm, in einem unterhalb des zweiten Bereichs angeordneten dritten Bereich beträgt der Abstand zwischen zwei Messpunkten von 5 bis 100 mm, und optional in einem unterhalb des dritten Bereichs angeordneten vierten Bereich beträgt der Abstand zwischen zwei Messpunkten von 15 bis 70 mm.

Bei einer Breitseiten-Kupferplatte beträgt der vertikale Abstand zwischen zwei jeweils in horizontaler Richtung ausgerichteten faseroptischen Temperatursensoren vorzugsweise von 50 bis 200 mm.

Außerdem beträgt bei einer Breitseiten-Kupferplatte der Abstand zwischen zwei Messpunkten eines in horizontaler Richtung ausgerichteten faseroptischen Temperatursensors vorzugsweise von 25 bis 200 mm.

Für eine schnelle Ausbaubarkeit der Kokille ist es vorteilhaft, wenn ein faseroptischer Temperatursensor über eine lösbare Schraub- oder Steckverbindung bzw. durch Spleißen mit dem Lichtwellenleiter verbunden ist. Für eine niedrige Dämpfung des Messsignals ist es günstig, wenn ein faseroptischer Temperatursensor durch Spleißen mit dem Lichtwellenleiter verbunden ist.

Es ist zweckmäßig, wenn der Lichtwellenleiter über eine lösbare Schraub- oder Steckverbindung mit der Auswerteeinheit verbunden ist.

Bei einer Kokille mit faseroptischen Sensoren, dessen erste Breitseiten-Kupferplatte auf einer Festseite und dessen zweite Breitseiten-Kupferplatte auf einer Losseite der Strangführung angeordnet ist, ist es hinsichtlich der Reduktion der Kosten vorteilhaft, wenn der Abstand zwischen zwei benachbarten Temperatursensoren auf der Festseite größer ist als der Abstand zwischen zwei benachbarten Temperatursensoren auf der Losseite. Diese Ausführungsform beruht auf der Erkenntnis, dass das Verhalten auf der Losseite kritischer ist als auf der Festseite.

### Kurze Beschreibung der Zeichnungen

Weitere Vorteile und Merkmale der vorliegenden Erfindung ergeben sich aus der Beschreibung nicht einschränkender Ausführungsbeispiele. Die nachfolgenden schematisch dargestellten Figuren zeigen:
Fig 1 das Tieflochbohren eines Lochs in eine Kupferplatte einer Kokille.
Fig 2 eine Darstellung von Verfahrensschritten beim Einbau eines faseroptischen Temperatursensors in eine Kupferplatte.
Fig 3 eine Darstellung der Verkabelung einer erfindungsgemäßen Kokille.
Fig 4 eine Darstellung einer Variante der Verkabelung einer erfindungsgemäßen Kokille.
Fig 5 eine Darstellung je einer Breitseiten-Kupferplatte für eine Fest- und eine Losseite einer Kokille.
Fig 6 eine Darstellung der Messpunkte von faseroptischen Temperatursensoren auf einer Breitseiten- und einer Schmalseiten-Kupferplatte.
Fig 7 und 8 je eine Darstellung der Messpunkte von faseroptischen Temperatursensoren auf einer Breitseiten-Kupferplatte für eine Los- und eine Festseite.
Fig 9 eine Darstellung der Messpunkte von faseroptischen Temperatursensoren auf einer Schmalseiten-Kupferplatte.
Fig 10 und 11 je eine Darstellung der Messpunkte von horizontalen faseroptischen Temperatursensoren für eine Breitseiten-Kupferplatte.

### Beschreibung der Ausführungsformen

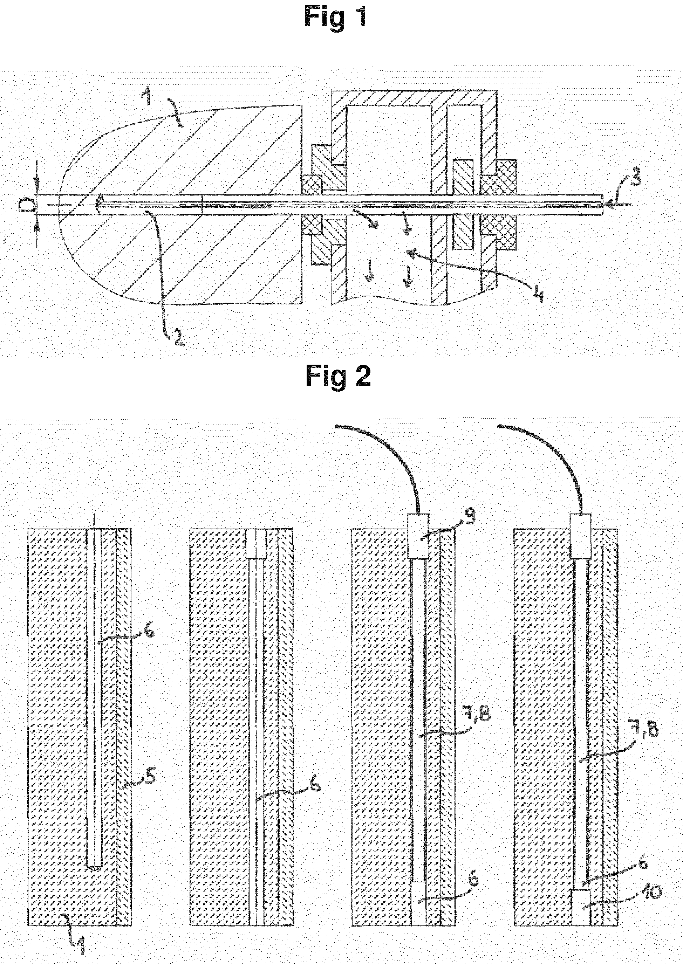

Die Figur 1 zeigt das Bohren eines zylindrischen Lochs in eine Kupferplatte 1 durch einen Einlippenbohrer 2 auf einer Tieflochbohrmaschine. Der Einlippenbohrer 2 wird in axialer Richtung von einem Kühlmittel 3 in Richtung des Bohrgrunds durchströmt, sodass der Bohrer 2 gekühlt, Bohrspäne 4 entfernt und das Loch gereinigt wird. Im Vergleich zum Erodieren kann das Loch wesentlich schneller, exakter und kostengünstiger hergestellt werden. Im Vergleich zum konventionellen Bohren können die Löcher bei gleichem Durchmesser viel tiefer gebohrt werden.

In Figur 2 sind wesentliche Verfahrensschritte zum Einbau eines faseroptischen Temperatursensors 7 in eine Kupferplatte 1 einer Kokille schematisch dargestellt. In der Darstellung ganz links wird ein Loch 6 auf einer Tieflochbohrmaschine gebohrt (siehe auch Figur 1). Das Loch 6, z.B. mit einem Durchmesser von 0,8 mm und einer Tiefe von 600 mm, kann räumlich in der Nähe der Heißseite der Kupferplatte 1 (z.B. mit einer Beschichtung 5) gebohrt werden, sodass der faseroptische Temperatursensor schnell auf Temperaturänderungen reagiert. Nach dem Durchbohren des Lochs (siehe zweite Darstellung von links) wird das obere Ende des Lochs 6 mit einem nicht dargestellten Plansenker angesenkt und das Loch gereinigt. In der dritten Darstellung von links wird eine Kanüle 8 mit einem faseroptischen Temperatursensor 7 in das Loch 6 eingeführt und am oberen Ende des Lochs 6 die Kanüle 8 axial durch einen Pfropfen 9 fixiert. Das Fixieren kann bspw. durch verschrauben oder verkleben erfolgen. In der äußersten rechten Darstellung von Figur 2 wurde das untere Ende des Lochs 6 durch einen Stopfen 10 verschlossen, sodass der faseroptische Temperatursensors 7 vor Schmutz geschützt ist.

Der Einbau der Kokille in eine Stranggießmaschine sowie das Verbinden des faseroptischen Temperatursensors 7 mit einer Auswerteeinheit sind für den Fachmann selbsterklärend und daher nicht gesondert in Figur 2 dargestellt.

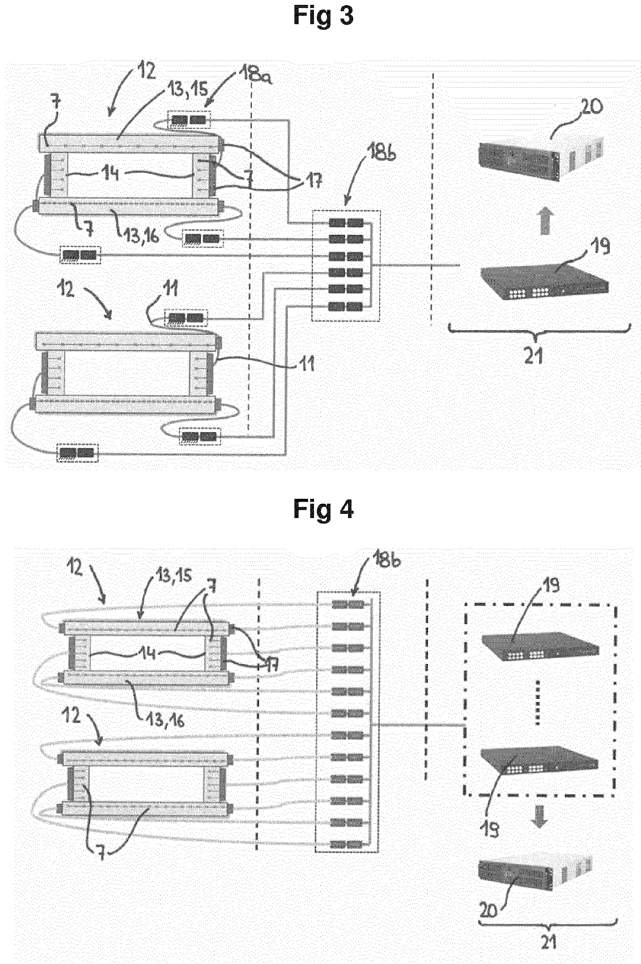

In Figur 3 ist die Verkabelung von zwei Kokillen 12 mit faseroptischen Temperatursensoren 7 auf den Breitseiten- 13 und Schmalseiten-Kupferplatten 14 mit einer Auswerteeinheit 19 und einem Steuerrechner 20 der Stranggießmaschine 21 schematisch dargestellt. Die Schmalseiten-Kupferplatten 14 weisen jeweils vier faseroptische Temperatursensoren 7 auf, die allesamt in vertikaler Richtung angeordnet sind. Die Breitseiten-Kupferplatten 13 auf der Festseite 15 der Stranggießmaschine weist 10 vertikale faseroptische Temperatursensoren 7 auf; die Breitseiten-Kupferplatten 13 auf der Losseite 16 weisen hingegen 34 vertikale faseroptische Temperatursensoren 7 auf. Die Signale von den faseroptischen Temperatursensoren 7 der Schmalseiten-Kupferplatte 14 werden zu einem Verbindungskasten 17 geführt. Auch die Signale von den faseroptischen Temperatursensoren 7 der Breitseiten-Kupferplatte 13 werden zu einem weiteren Verbindungskasten 17 geführt. Je ein Verbindungskasten 17 auf einer Schmalseite ist über einen Lichtwellenleiter 11 mit einem Verbindungskasten auf einer Breitseite verbunden. Über Kupplungen 18a an der Kokille 12 werden die Lichtwellenleiter 11 zu Kupplungen 18b außerhalb der Kühlkammer geführt. Die Auswerteeinheit 19 und der Steuerrechner 20 sind auf dem Festland 21 der Stranggießmaschine angeordnet. Der horizontale Abstand zwischen zwei benachbarten faseroptische Temperatursensoren 7 auf einer Breitseiten-Kupferplatte 13 der Festseite 15 ist ca. 200 mm, hingegen beträgt der horizontale Abstand zwischen zwei benachbarten faseroptische Temperatursensoren 7 auf einer Breitseiten-Kupferplatte 13 der Losseite der Stranggießmaschine ca. 60 mm.

Die Figur 4 zeigt eine Variante der Verkabelung der faseroptischen Temperatursensoren 7. Fünf vertikale faseroptische Temperatursensoren 7 auf einer Schmalseiten-Kupferplatte 14 und 34 faseroptische Temperatursensoren 7 auf einer Breitseiten-Kupferplatte 13 werden zu je einem separaten Verbindungskasten 17 geführt und anschließend über Kupplungen 18b außerhalb der Kühlkammer zu den Auswerteeinheit 19 auf dem Festland 21 der Stranggießmaschine geführt. Die Auswerteeinheit 19 ist über ein Netzwerk mit dem Steuerrechner 20 der Stranggießmaschine verbunden. Im Unterschied zu Figur 3 ist der horizontale Abstand zwischen zwei benachbarten faseroptischen Temperatursensoren 7 auf einer Breitseiten-Kupferplatte 13 stets ca. 60 mm, unabhängig davon, ob es sich um die Fest- oder die Losseite handelt.

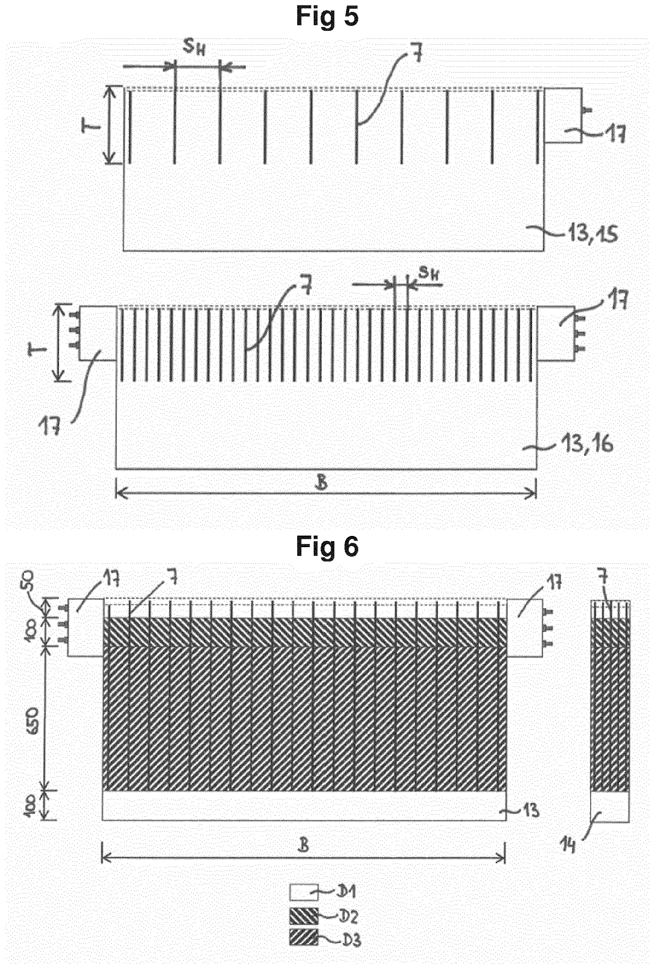

In Figur 5 ist der horizontale Abstand s_{H} zwischen zwei benachbarten faseroptischen Temperatursensoren 7 auf einer Breitseiten-Kupferplatte 13 näher dargestellt. Auf der Festseite 15 beträgt der Abstand s_{H} = 60 mm, auf der Losseite beträgt s_{H} = 200 mm. Durch die höhere Anzahl von faseroptischen Sensoren auf der Losseite 16 werden die Signale der Lichtwellenleiter zu zwei, jeweils außen angeordneten, Verbindungskästen 17 geführt. Auf der Festseite 15 werden die Signale der Lichtwellenleiter nur zu einem einzigen Verbindungskasten 17 geführt. Die Bohrungstiefe T beträgt 450 mm, der Durchmesser der Bohrungen 1 mm. Die Breite B einer Breitseiten-Kupferplatte 13 beträgt 2150 mm.

Die Figur 6 zeigt die Anordnung von faseroptischen Temperatursensoren 7 auf einer Breitseiten-Kupferplatte 13 und einer Schmalseiten-Kupferplatte 14. Die Breitseiten-Kupferplatte 13 weist insgesamt 20 faseroptische Temperatursensoren 7 auf, der horizontale Abstand zwischen zwei benachbarten Temperatursensoren 7 beträgt 100 mm; die Schmalseiten-Kupferplatte 14 insgesamt 5 Stück, der horizontale Abstand zwischen zwei benachbarten Temperatursensoren 7 beträgt 50 mm. Die faseroptischen Temperatursensoren 7 weisen sowohl auf der Breitseiten-Kupferplatte 13 und der Schmalseiten-Kupferplatte 14 jeweils drei unterschiedliche Bereiche D1-D3 mit Messpunkten auf. Im Bereich D1, der sich von der Oberkante der Kupferplatte 14 um 50 mm in vertikaler Richtung nach unten erstreckt, weisen die faseroptischen Temperatursensoren 7 keine Messpunkte auf. Im nachfolgenden Bereich D2 mit einer Länge von 100 mm ist der Abstand zwischen zwei Messpunkten 5 mm. Im unteren Bereich D3 mit einer Länge von 650 mm ist der Abstand zwischen zwei Messpunkten 25 mm. Im Regelbetrieb der Kokille befindet sich der Gießspiegel im Bereich D2, d.h. im Bereich mit der höchsten Auflösung. Somit weist jeder in vertikaler Richtung eingebaute faseroptische Temperatursensoren 7 insgesamt 47 Messpunkte auf. Für eine Breitseiten-Kupferplatte 13 ergeben sich 47 x 20 = 940 Messpunkte; für eine Schmalseiten-Kupferplatte 14 ergeben sich 47 x 5 = 235 Messpunkte. Im Bereich D2 der Breitseiten-Kupferplatte 13 sind pro m² Kokillenoberfläche > 2000 Messpunkte angeordnet; im Bereich D2 der Schmalseiten-Kupferplatte 14 sind es > 4000 Messpunkte pro m² Kokillenoberfläche.

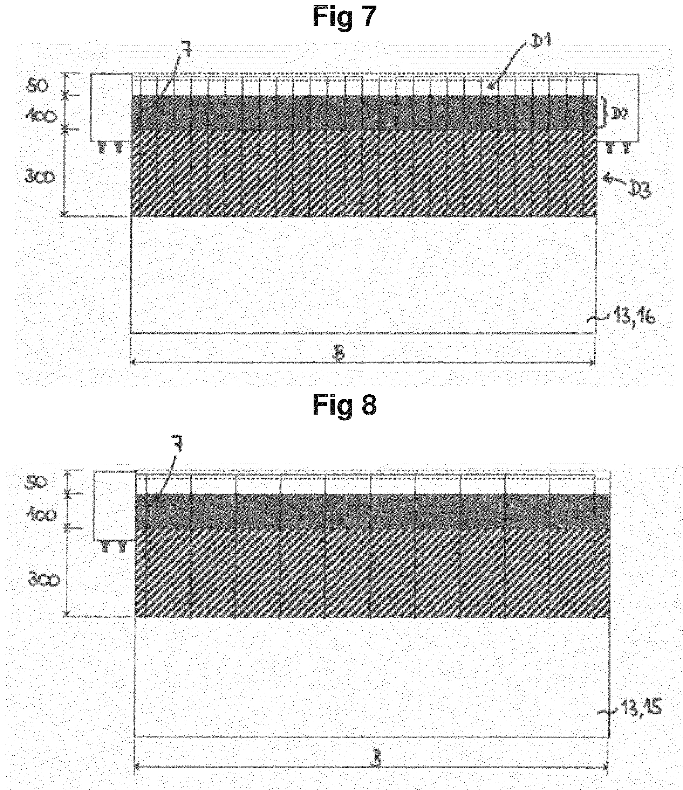

In Figur 7 ist eine weitere Anordnung von faseroptischen Temperatursensoren 7 auf einer Breitseiten-Kupferplatte 13 für eine Losseite 16 dargestellt. Pro Breitseiten-Kupferplatte 13 sind insgesamt 27 faseroptischen Temperatursensoren 7 verbaut. In einem oberen Bereich D1 mit einer Länge von 50 mm weisen die Temperatursensoren 7 keine Messpunkte auf. Im nachfolgenden Bereich D2 mit einer Länge von 100 mm beträgt der Abstand zwischen zwei benachbarten Messpunkten 5 mm. Im untersten Bereich D3 mit einer Länge von 300 mm beträgt der Abstand zwischen zwei benachbarten Messpunkten 30 mm. Somit weist jeder faseroptische Temperatursensor 7 insgesamt 31 Messpunkte auf. Für die Breitseiten-Kupferplatte 13 ergeben sich 27 x 31 = 837 Messpunkte. Im Bereich D2 der Breitseiten-Kupferplatte 13 sind pro m² Kokillenoberfläche > 2500 Messpunkte angeordnet.

Die Figur 8 zeigt eine Anordnung von faseroptischen Temperatursensoren 7 für eine Breitseiten-Kupferplatte 13 für eine Festseite 15, die der in Figur 7 dargestellten Losseite 16 gegenüberliegt. Pro Breitseiten-Kupferplatte 13 sind insgesamt 11 faseroptischen Temperatursensoren 7 verbaut. Die Anzahl der Bereiche D1 bis D3, die Länge der Bereiche sowie die Abstände zwischen zwei Messpunkten ist jeweils ident zu Figur 7. Für die Breitseiten-Kupferplatte 13 ergeben sich 11 x 31 = 341 Messpunkte. Im Bereich D2 der Breitseiten-Kupferplatte 13 sind pro m² Kokillenoberfläche > 1000 Messpunkte angeordnet.

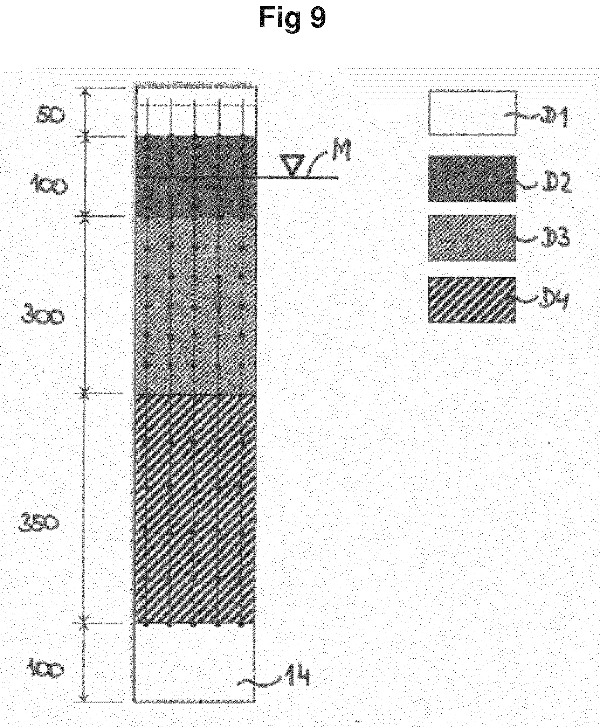

Die Figur 9 zeigt eine Anordnung von faseroptischen Temperatursensoren 7 für eine Schmalseiten-Kupferplatte 14. Pro Schmalseiten-Kupferplatte 14 sind insgesamt 5 vertikal angeordnete faseroptische Temperatursensoren 7 verbaut. In einem oberen Bereich D1 mit einer Länge von 50 mm weisen die Temperatursensoren 7 keine Messpunkte auf. Im nachfolgenden Bereich D2 mit einer Länge von 100 mm beträgt der Abstand zwischen zwei benachbarten Messpunkten 5 mm. Im nachfolgenden Bereich D3 mit einer Länge von 100 mm beträgt der Abstand zwischen zwei benachbarten Messpunkten 30 mm. Im untersten Bereich D4 mit einer Länge von 350 mm beträgt der Abstand zwischen zwei benachbarten Messpunkten 35 mm. Somit weist jeder faseroptische Temperatursensoren 7 insgesamt 41 Messpunkte auf. Die Lage des Meniskus M während des Regelbetriebs der Kokille ist durch ein Dreieck bzw. durch M dargestellt. Im Bereich D2 der Schmalseiten-Kupferplatte 14 sind pro m² Kokillenoberfläche > 13000 Messpunkte angeordnet.

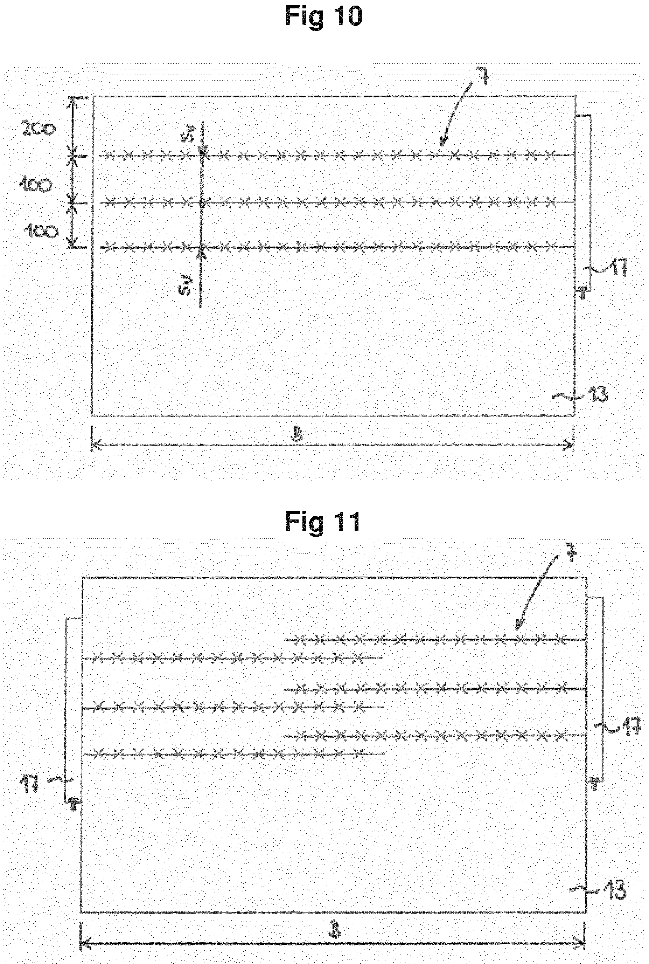

In den Figuren 7 bis 9 sind die Messpunkte durch Punkte dargestellt. In den Figuren 10 und 11 werden diese durch x symbolisiert.

In den Figuren 10 und 11 sind zwei Anordnungen von faseroptischen Temperatursensoren 7 für Breitseiten-Kupferplatten 13 mit einer Breite B von 2100 mm dargestellt. Im Unterschied zu den vorigen Figuren sind die faseroptischen Temperatursensoren 7 in horizontaler Richtung ausgerichtet. In Figur 10 ist das Loch ein Durchgangsloch mit einem Durchmesser von 3 mm und einer Länge von 2100 mm. In Figur 11 wurden die Löcher als Sacklöcher mit Durchmesser 2 mm ausgeführt, deren Tiefe nur ca. halb so tief wie in Figur 10 ist. In die Sacklöcher von Figur 11 werden von beiden Seiten Kanülen mit Temperatursensoren 7 eingeführt, sodass die Messpunkte im obersten, von rechts gebohrten, Sackloch gemeinsam mit dem im obersten, von links gebohrten, Sackloch einen gemeinsamen virtuellen Sensor ergeben. Für die nachfolgenden zwei Reihen gilt dies analog. Vorteilhaft an den horizontalen faseroptischen Sensoren ist, dass z.B. Längsrisse im Strang oder Schalenhänger sehr präzise erkannt werden können. Im Gegensatz zu Figur 10 sind die Löcher in Figur 11 dünner, da die Bohrtiefe aufgrund des Bohrens von beiden Seiten viel geringer ist.

Die Anwendung des erfindungsgemäßen Verfahrens zum Einbau von faseroptischen Temperatursensoren in eine Kokille bzw. die erfindungsgemäßen Kokillen bringen folgende Vorteile:
- Unempfindlichkeit der Messung gegenüber statischen oder dynamischen Magnetfeldern,
- geringerer Verkabelungsaufwand,
- Erhöhung der räumlichen Auflösung der Temperaturmessung in der Kokille (mehr als 4000 Messpunkte pro m² Oberfläche einer Kupferplatte möglich),
- geregeltes Füllen der Kokille möglich,
- Messung der Gießpulverdicke möglich,
- verbesserte Erkennung von Längsrissen und Durchbrüchen möglich,
- präzisere Beobachtung des Erstarrungsverhaltes des Strangs möglich,
- Messung des Kontaktverhaltens zwischen den Schmalseiten-Kupferplatten und des Strangs bei unterschiedlichen Schrägstellungen (*taper*) der Schmalseiten-Kupferplatten möglich,
- Visualisierung der lokalen Wärmeströme und der Schalendicken möglich,
- Messung des Meniskus-Profils in Echtzeit möglich,
- Messung der Symmetrie des Meniskus möglich,
- Erkennung von gut bzw. schlecht geschmierten Bereichen in der Kokille möglich,
- Erkennung von Längsrissen mit Länge ≥ 4cm möglich, sowie
- vielfältige Möglichkeiten beim Einbau der faseroptischen Temperatursensors hinsichtlich Breite und Höhe in der Kokille.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Kupferplatte
- 2: Einlippenbohrer
- 3: Kühlmittel
- 4: Bohrspäne
- 5: Beschichtung
- 6: Loch
- 7: faseroptischer Temperatursensor
- 8: Kanüle
- 9: Pfropfen
- 10: Stopfen
- 11: Lichtwellenleiter
- 12: Kokille
- 13: Breitseiten-Kupferplatte
- 14: Schmalseiten-Kupferplatte
- 15: Festseite
- 16: Losseite
- 17: Verbindungskasten
- 18a, 18b: Kupplung
- 19: Auswerteeinheit
- 20: Steuerrechner
- 21: Festland

- B: Breite
- D1...D4: Bereich
- D: Durchmesser
- M: Meniskus
- S_{H}: Abstand in horizontaler Richtung
- S_{V}: Abstand in vertikaler Richtung
- T: Tiefe

## Patentansprüche

1. Verfahren zum Einbau eines faseroptischen Temperatursensors (7) in eine Kokille (12), umfassend die Schritte:
- Bohren eines zylindrischen Lochs (6) in eine Kupferplatte (1, 13, 14) der Kokille (12), wobei das Loch (6) auf einer Tieflochbohrmaschine durch einen Einlippenbohrer (2) gebohrt wird und während des Bohrens ein Kühlmittel (3) den Einlippenbohrer (2) in Richtung des Bohrgrunds durchströmt, sodass das Kühlmittel (3) den Einlippenbohrer (2) kühlt und Bohrspäne (4) vom Bohrgrund entfernt;
- Einführen einer zylindrischen Kanüle (8) in das Loch (6), wobei der faseroptische Temperatursensor (7) mit mehreren Messstellen zur Temperaturmessung innerhalb der Kanüle (8)angeordnet ist;
- Fixieren der Kanüle(8), wobei die Kanüle (8) in axialer Richtung des Lochs (6) fixiert wird;
- Einbau der Kokille (12) in eine Stranggießmaschine, wobei die Kokille (12) mit einer Oszilliereinheit verbunden wird;
- Verbinden des faseroptischen Temperatursensors (7) mit einer auf dem Festland (21) der Stranggießmaschine angeordneten Auswerteeinheit (19), sodass die Auswerteeinheit (21) die Temperatur an den Messstellen des Temperatursensors (7) messen kann.

2. Verfahren nach Anspruch 1, **dadurch gekennzeichnet, dass** das zylindrische Loch (6) ein Durchgangsloch ist und ein zweites Ende des Lochs (6) verschlossen wird.

3. Verfahren nach Anspruch 1, **dadurch gekennzeichnet, dass** das zylindrische Loch (6) ein Sackloch ist.

4. Verfahren nach einem der vorhergehenden Ansprüche, **dadurch gekennzeichnet, dass** für die Tiefe des Lochs T gilt *T* ≥ 200*D*, bevorzugt *T* ≥ 300*D,* besonders bevorzugt *T* ≥ 400*D*, wobei D der Durchmesser des zylindrischen Lochs (6) ist.

5. Verfahren nach Anspruch 4, **dadurch gekennzeichnet, dass** der Durchmesser D zwischen 0,8 und 4 mm beträgt.

6. Verfahren nach einem der vorhergehenden Ansprüche, **dadurch gekennzeichnet, dass** für den Durchmesser d der Kanüle (8) gilt 0,8.*D* ≥ *d* ≥ 0,999.*D*, wobei D der Durchmesser des zylindrischen Lochs (6) ist.

7. Verfahren nach einem der vorhergehenden Ansprüche, **dadurch gekennzeichnet, dass** ein erstes Sackloch an einer ersten Position auf einer ersten Seite der Kupferplatte (1) und ein zweites Sackloch an einer zweiten Position auf einer zweiten Seite der Kupferplatte (1) gebohrt wird, wobei die erste Seite der zweiten Seite gegenüberliegt sowie die erste Position im eingebauten Zustand der Kupferplatte im Wesentlichen in vertikaler oder horizontaler Richtung der zweiten Position gegenüberliegt.

8. Kokille (12) mit mehreren faseroptischen Temperatursensoren (7), wobei die faseroptischen Temperatursensoren (7) gemäß dem Verfahren nach einem der Ansprüche 1 bis 7 in die Kokille (12) eingebaut werden,
- wobei die Kokille (12) mit einer Oszilliereinheit lösbar verbunden ist;
- wobei zumindest vier faseroptische Temperatursensoren (7) in einer oder mehreren Kupferplatten (1, 13, 14) in vertikaler Richtung angeordnet sind, sodass die Füllhöhe einer Stahlschmelze in der Kokille (12) durch eine Auswerteeinheit (19) zur Auswertung der faseroptischen Temperatursensoren (7) bestimmt werden kann; und
- wobei die Auswerteeinheit (19) auf dem Festland (21) der Stranggießmaschine angeordnet ist, und ein Lichtwellenleiter (11) einen faseroptischen Temperatursensor (7) mit der Auswerteeinheit (19) verbindet.

9. Kokille (12) mit mehreren faseroptischen Temperatursensoren (7), wobei die faseroptischen Temperatursensoren (7) gemäß dem Verfahren nach einem der Ansprüche 1 bis 7 in die Kokille (12) eingebaut werden,
- wobei die Kokille (12) mit einer Oszilliereinheit lösbar verbunden ist;
- wobei zumindest zwei faseroptische Temperatursensoren (7) in einer oder mehreren Kupferplatten (1, 13, 14) in horizontaler Richtung angeordnet sind, sodass bspw. ein Längsriss im Strang oder ein Schalenhänger des Strangs durch eine Auswerteeinheit (19) zur Auswertung der faseroptischen Temperatursensoren (7) bestimmt werden kann; und
- wobei die Auswerteeinheit (19) auf dem Festland (21) der Stranggießmaschine angeordnet ist, und ein Lichtwellenleiter (11) einen faseroptischen Temperatursensor (7) mit der Auswerteeinheit (19) verbindet.

10. Kokille nach Anspruch 8 oder 9, **dadurch gekennzeichnet, dass** die Kokille (12) je zwei Breitseiten- (13) und zwei Schmalseiten-Kupferplatten (14) aufweist, wobei im eingebauten Zustand der Kokille (12) der horizontale Abstand S_{H} zwischen zwei, jeweils in vertikaler Richtung angeordneten, benachbarten faseroptischen Temperatursensoren (7) auf einer Breitseiten-Kupferplatte (13) zwischen 30 und 300 mm beträgt, und der horizontale Abstand S_{H} zwischen zwei, jeweils in vertikaler Richtung angeordneten, benachbarten faseroptischen Temperatursensoren (7) auf einer Schmalseiten-Kupferplatte (14) zwischen 30 und 200 mm beträgt.

11. Kokille nach Anspruch 8 oder 9, **dadurch gekennzeichnet, dass** die Kokille (12) eine rohrförmige Kupferplatte aufweist, wobei die rohrförmige Kupferplatte zumindest 4 vertikal ausgerichtete, in Umfangsrichtung der Kupferplatte (1) angeordnete, faseroptische Temperatursensoren (7) aufweist.

12. Kokille nach einem der Ansprüche 8 bis 11, **dadurch gekennzeichnet, dass** ein in vertikaler Richtung ausgerichteter faseroptischer Temperatursensor (7) für eine Breitseiten-Kupferplatte (13) oder für eine rohrförmige Kupferplatte in einem oberen ersten Bereich (D1) keine Messpunkte aufweist, dass in einem unterhalb des ersten Bereichs angeordneten zweiten Bereich (D2) der Abstand zwischen zwei Messpunkten von 2 bis 20 mm beträgt, und dass in einem unterhalb des zweiten Bereichs angeordneten dritten Bereich (D3) der Abstand zwischen zwei Messpunkten von 5 bis 100 mm beträgt.

13. Kokille nach einem der Ansprüche 8 bis 12, **dadurch gekennzeichnet, dass** ein in vertikaler Richtung ausgerichteter faseroptischer Temperatursensor (7) für eine Schmalseiten-Kupferplatte (14) in einem oberen ersten Bereich (D1) keine Messpunkte aufweist, dass in einem unterhalb des ersten Bereichs angeordneten zweiten Bereich (D2) der Abstand zwischen zwei Messpunkten von 2 bis 20 mm beträgt, dass in einem unterhalb des zweiten Bereichs angeordneten dritten Bereich (D3) der Abstand zwischen zwei Messpunkten von 5 bis 100 mm beträgt, und optional dass in einem unterhalb des dritten Bereichs angeordneten vierten Bereich (D4) der Abstand zwischen zwei Messpunkten von 15 bis 70 mm beträgt.

14. Kokille nach einem der Ansprüche 8 bis 13, **dadurch gekennzeichnet, dass** der vertikale Abstand (S_{V}) zwischen zwei jeweils in horizontaler Richtung ausgerichteten faseroptischen Temperatursensoren (7) für eine Breitseiten-Kupferplatte (13) von 50 bis 200 mm beträgt.

15. Kokille nach einem der Ansprüche 8 bis 14, **dadurch gekennzeichnet, dass** der Abstand zwischen zwei Messpunkten eines in horizontaler Richtung ausgerichteten faseroptischen Temperatursensors (7) für eine Breitseiten-Kupferplatte (13) von 25 bis 200 mm beträgt.

16. Kokille nach einem der Ansprüche 8 bis 15, **dadurch gekennzeichnet, dass** ein faseroptischer Temperatursensor (7) über eine lösbare Schraub- oder Steckverbindung oder durch Spleißen mit dem Lichtwellenleiter (11) verbunden ist.

17. Kokille nach einem der Ansprüche 8 bis 16, **dadurch gekennzeichnet, dass** der Lichtwellenleiter (11) über eine lösbare Schraub- oder Steckverbindung mit der Auswerteeinheit (19) verbunden ist.

18. Kokille nach einem der Ansprüche 10 bis 17, wobei eine erste Breitseiten-Kupferplatte (13) auf einer Festseite (15) und eine zweite Breitseiten-Kupferplatte (13) auf einer Losseite (16) angeordnet ist, **dadurch gekennzeichnet, dass** der horizontale Abstand zwischen zwei benachbarten faseroptischen-Temperatursensoren (7) auf der Festseite (15) größer ist als der horizontale Abstand zwischen zwei benachbarten Temperatursensoren (7) auf der Losseite (16).
